# EUROPEAN PATENT SPECIFICATION

(11) **EP 1 399 398 B1**
(45) Date of publication and mention of the grant of the patent: **03.11.2004**
(21) Application number: 02738159.9
(22) Date of filing: 11.06.2002
(51) Int. Cl.: C05G 3/00, B01J 2/30

(54) **ADDITIVES PREVENTING CAKING AND HUMECTATION OF NITROGENOUS FERTILIZERS**
ZUSATZSTOFFE GEGEN DIE VERKLUMPUNG UND DIE BEFEUCHTUNG VON STICKSTOFFDÜNGEMITTELN
ADJUVANTS DE PREVENTION DU MOTTAGE ET DE L'HUMECTATION DES ENGRAIS AZOTES

(30) Priority: 12.06.2001 ES 200101353
(43) Date of publication of application: 24.03.2004
(73) Proprietor: KAO CORPORATION, S.A., 08210 Barbera del Valles, (Barcelona) (ES)
(72) Inventor: RIAZA MARTINEZ, Joan-Antoni, E-08210 Barbera del Valles (Barcelona) (ES); PRAT MONTOY, Antoni, E-08210 Barbera del Valles (Barcelona) (ES)
(74) Representative: Carpintero Lopez, Francisco
(86) International application number: PCT/EP2002/006380
(87) International publication number: WO 2002/100799

(56) References cited:
- EP-A- 0 113 687
- US-A- 5 364 440

## Description

### FIELD OF THE INVENTION

The present invention relates to new additives for preventing caking and humectation of nitrogenous fertilizers, based on compositions of materials containing hydrophobic substances and phosphoric acid esters.

### PRIOR STATE OF THE ART

Spanish Patent Application ES-A-2121694, filed by the Applicant, describes anti-caking compositions for granular fertilizers based on the combined use of mineral oils, fatty amines and phosphoric acid alkyl esters. The description of said Spanish application includes an extensive exposition of the state of the art relating to anti-caking compositions for fertilizers, with specific reference made to relevant documents.

Table II of example 1 of US patent 5,364,440 describes a composition that contains, expressed as % by weight, 50% of mineral paraffin oil, 40% of a paraffin wax and 10% of the magnesium salt of a phosphoric acid C₁₆-C₁₈ alkyl ester. Said composition is only described as an anti-caking agent for fertilizers, without any mention being made of aspects related to preventing humectation.

Nitrogenous fertilizers, particularly those based on ammonium nitrate (AN) or ammonium and calcium nitrate (ACN), not only suffer from caking that restrict their handling and dosing, but present the drawback of absorbing humidity during their storage which, when stored or transported in large amounts as usually, often results in filtrations of highly moist material forming channels within the fertilizer mass, known as stalactites or candles, and which may even form deposits of liquefied fertilizer in the base of the pile due to its high degree of humectation.

Patent Application EP-A-392468 proposes a solution to this problem by using compositions containing oily products and waxes together with compounds obtained by reacting an amine or an alcohol with an acid or a carboxylic anhydride containing a C₂₀-C₅₀₀ hydrocarbonated group, compounds that are known and available in the market under the commercial name GALORYL ATH 632M.

The description of EP-A-692468 clearly states that it is not possible *a priori* to expect that an anti-caking additive for fertilizers also have properties as an humectation inhibitor (see page 2, lines 40 to 43, and page 5, lines 1 to 4 and 34 to 35).

In said patent application it is also clearly admitted that the composition object of the patent, despite being effective against humectation, is much less effective against caking than classical anti-caking agents. (See table III and the following comment).

Patent application EP-A-702999 proposes the use of mixed compositions containing as an anti-caking agent fatty amines and/or salts of fatty amines with arylalkyl sulphonic acids and/or salts of fatty amines with phosphoric acid esters, and as an anti-humectation agent compounds for inhibiting humectation described above in the aforementioned patent application EP-A-692468.

Thus, in the patent application EP-A-702999 the problem to solve is obtaining additives for preventing both compacting and humectation of fertilizers, and the solution proposed consists in combining in a single composition specific compounds with already-known anti-caking properties, but lacking appreciable anti-humectation properties, and specific anti-humectation compounds which have no effective activity as anti-caking agents by themselves.

It is thus clear that the problem of obtaining anti-caking and anti-humectation additives for nitrogenous fertilizers still requires new solutions that allow obtaining simpler and less expensive compositions, and with a greater effectiveness.

### OBJECT OF THE INVENTION

The object of the present invention are new additives to prevent caking and humectation of nitrogenous fertilizers based on compositions of materials free of fatty amines or their salts that contain hydrophobic substances and phosphoric acid esters.

Also part of the object of the invention is the use of said additives for the anti-caking and anti-humectation treatment of nitrogenous fertilizers, and a procedure for obtaining nitrogenous fertilizers .that are resistant to caking and humectation.

### DESCRIPTION OF THE INVENTION

The additives for preventing caking and humectation of nitrogenous fertilizers object of the invention are compositions of materials free of fatty acids or their salts, characterized in that they comprise:
(i) between 50 and 90 parts by weight of a macrocrystalline paraffin having a viscosity at 100°C between 2 and 5 cSt (ASTM D-455) and with a paraffin oil content under 20% by weight (ASTM D-721);
(ii) between 0 and 20 parts by weight of a paraffinic oil having a viscosity at 100°C between 3 and 40 cSt (ASTM D-455);
(iii) between 0 and 10 parts by weight of a microcrystalline paraffin having a viscosity at 100°C between 10 and 25 cSt (ASTM D-455) with a paraffin oil content not greater than 15% by weight (ASTM D-721) ;
(iv) between 10 and 50 parts by weight of phosphoric acid monoesters and/or diesters of C₂-C₂₂ alkyl or C₂-C₁₂ arylalkyl, optionally alkoxylated;
so that the total paraffin oil content of the composition is greater than 1% by weight.

Macrocrystalline paraffins are petroleum derivatives that contain carbonated chains, mainly linear chains, with a molecular mass between 250 and 500 and, although solid at room temperature, with low melting points, generally between 40 and 70 °C.

For the purposes of the present invention, macrocrystalline paraffins having a viscosity between 2 and 5 cSt, measured at 100°C in accordance with the considerations of standard ASTM D-455 (American Standard), are chosen.

Macrocrystalline paraffins are commercially available and commercial products always have a certain portion of paraffin oil that is not constant and may vary among the various batches purchased. For the purposes of the present invention, the oil content of the macrocrystalline paraffin must be less than 20% by weight as determined in accordance with standard ASTM D-721.

The preferred macrocrystalline paraffins are Spindle-type paraffins with a viscosity between 2 and 3 cSt at 100°C and an oil content not greater than 12% by weight. Within this type of paraffins can be mentioned commercial references PARAFINA PRS and PARAFINA 1ST, both supplied by the company Repsol Derivados, S.A.

Paraffinic oils are also commercially available petroleum derivatives that are rich in paraffinic components and have a low density and a variable viscosity. Their presence in the compositions of the invention is necessary, although the need to add them to said compositions and the amount to be added depends on the oil content of the macrocrystalline paraffin used.

The total content of paraffinic oil in the compositions of the invention can be between 5% and 25% by weight, preferably between 7% and 20% by weight and more preferably between 9% and 15% by weight.

Among current paraffinic oils suitable for the invention can be mentioned the oil corresponding to the commercial reference EXTENSOIL 200, supplied by Repsol Derivados, S.A.

Microcrystalline paraffin is an optional component, albeit preferred, constituent of the compositions object of the invention. It is also derived from petroleum, and mainly contains saturated hydrocarbons in which predominate linear chains with short branches (isoparaffins). They generally have average molecular masses between 500 and 800 and are solid at room temperature, having melting points between 70°C and 100°C. Commercial products also generally contain a proportion of oil.

Among the microcrystalline paraffins suitable for the invention can be mentioned the one commercially known as PARAFINA PRB (495-D) supplied by the company Repsol Derivados, S.A.

Phosphoric acid esters suitable for the object of the invention are products well known to experts on tensioactives, and are obtained by reacting C₂-C₂₂ fatty alcohols or alkyl (C₂-C₁₂) phenols with phosphorus pentoxide, and optionally can be alkoxylated by reaction with 2-50 moles of an alkylene oxide, mainly ethylene and/or propylene oxide.

The products obtained are a mixture of monoesters and diesters, and for the purposes of the present invention the preferred products are those in which the molar ratio of monoester to diester is between 70:30 and 30:70, and more preferably between 70:30 and 50:50, being particularly preferred those having a ratio of monoester to diester between 65:35 and 55:45.

Unalkoxylated phosphoric acid esters of C₂-C₂₂ alkyl are preferred, and unalkoxylated phosphoric acid esters of C₁₆-C₁₈ alkyl with a molar ratio of monoester to diester of 60:40 are particularly preferred, such as those available under the commercial reference FOSFODET 80/50, supplied by the company KAO Corporation, S.A.

Since phosphoric acid esters are obtained from a reaction with phosphorus pentoxide, they usually contain residues of (poly) phosphoric acids that can lead to undesirable brownish colours in the additives object of the invention.

The authors of the present invention have found that the total or partial neutralization of the phosphoric acid esters with an amine selected from monoalkylamine, dialkylamine, trialkylamine, monohydroxyalkylamine, dihydroxyalkylamine or trihydroxyalkylamine, all of them C₁-C₄ amines such as monoethanolamine, allows to prevent or substantially diminish the appearance of said colouring in the additives of the present invention. This aspect, albeit optional, is also part of the invention.

The amounts of short chain amine to be added shall depend on the type and quality of the phosphoric acid esters used, and on the degree of neutralization deemed necessary to reduce said undesired colouring. For example, when using FOSFODET 80/50 it may be enough to use monoethanolamine in amounts between 0.1 and 3.5 parts by weight with respect to the total composition, preferably between 0.5 and 2.0 parts by weight.

Anti-caking and anti-humectation additives are preferred having compositions that are free of fatty amines or their salts and that they comprise:
(i) between 60 and 80 parts by weight of macrocrystalline paraffin as described above;
(ii) between 2 and 12 parts by weight of paraffin oil as described above;
(iii) between 2 and 7 parts by weight of microcrystalline paraffin as described above;
(iv) between 12 and 20 parts by weight of phosphoric acid monoesters and/or diesters as described above;
so that the total oil content in the prepared composition is between 7% and 20% by weight.

The additives object of the invention can be obtained by conventional methods of mixing the various constituents, well known to the expert. Thus, for example, the various constituents can be mixed in a molten state and after the mixture is homogenized, this is packaged and optionally cooled.

The additives obtained in this way can be used to treat nitrogenous fertilizers, particularly AN and CAN fertilizers, providing them with an efficient resistance to caking and humectation; so that these fertilizers, even after their period of storage and transport, show excellent disintegrating properties and do not form the known stalactites or candles due to a high humectation degree, nor liquefied deposits in the base of the piles of stored product. This use is also part of the present invention.

Also part of the present invention is a procedure for obtaining nitrogenous fertilizers resistant to caking and humectation that consists in applying on the surface of the fertilizer granules a coating of the aforementioned additives.

The procedures for applying said coating are well known to the expert and consist, for example, in applying the additive in a molten state by spraying techniques, on the surface of the fertilizer granules after said additive is manufactured.

The amount of additive to apply on the fertilizer will depend in each case on the humidity conditions, time of storage and temperature expected for storage of the fertilizer, although good results can be obtained when the additives are applied to the fertilizer in proportions from 500 to 2000 ppm with respect to fertilizer weight.

The examples that follow intend to provide an expert on the field with a sufficiently clear and thorough explanation of the present invention, but should not be understood as a limitation of the essential aspects of the object of the invention, as described in the previous sections of this description.

### Examples

### Example 1. Preparation of the additives of the invention.

### 1.1. General Method

In a container provided with stirring, the macrocrystalline paraffin is loaded in a molten state and then the microcrystalline paraffin and the paraffinic oil are added under stirring and at a temperature between 80° and 90° C. The mass is kept stirred and the phosphoric acid ester added in flakes or molten, maintaining the same temperature. Once the mass has been homogenised, monoethanolamine with at least 99% of purity is optionally added. The molten mass is left stirred for 30 minutes at the same temperature. Afterwards it is unloaded and packaged.

### 1.2 Prepared compositions

According to the general method, the compositions A, B, C and D described in Table 1 are prepared, in which the amounts of the constituents shown are expressed as parts by weight of each component added to each composition.

**Table 1.**

| Anti-caking and anti-humectation compositions. | | | | |
|---|---|---|---|---|
| Constituents | A | B | C | D |
| PARAFFIN PRS, with 9% oil (REPSOL) | -- | -- | 71.9 | 71.0 |
| PARAFFIN 1ST, with 2.6% oil (REPSOL) | 67.2 | 72.4 | -- | -- |
| PARAFFIN PRB (495-D) (REPSOL) | 5.0 | 5.0 | 5.0 | 5.0 |
| EXTENSOIL 200 (REPSOL) | 9.8 | 10.6 | 5.1 | 5.0 |
| FOSFODET 80/50 (KAO CO.) | 18.0 | 12.0 | 18.0 | 18.0 |
| Monoethanolam ine 99% | -- | -- | -- | 1.0 |

The names of the constituents used in the table correspond to the commercial references described in the section corresponding to the description of the invention.

### Example 2. Assessment methods

### 2.1 Accelerated caking test

70 to 100 g of granular fertilizer are introduced in cylindrical perforated metal test tubes 60mm high and 45mm diameter, which can be longitudinally opened for extracting samples, using 3 test tubes for each fertilizer sample. The samples are subjected to a pressure of 1.26 Kg/cm² in an INSTRON dynamometer, model 1011, in one of the two following climate conditions:
(a) in a climate chamber HERAEUS model HC 2057 at a relative humidity of 60% and a temperature of 20°C for a period of 15 days. Afterwards the test tubes are left at ambient temperature and humidity and the degree of caking is assessed.
(b) In a room at a temperature of 40°C, keeping the test tubes insulated from external humidity for a period from 3 to 15 days, depending on the fertilizer. Afterwards the test tubes are assessed immediately, without allowing tempering.

The results are assessed by opening the test tubes carefully and depositing the sample on an unshaken sieve with 6.3mm mesh size, previously weighed, then weighing the amount of sample retained. The amount of sample retained is expressed as a % of the total weight and the result indicates the average % of caking before break-up.

If the sample were fully clumped it is then broken up in the aforementioned dynamometer at a rate of 10 mm/min. The result is expressed as an average Resistance to break-up in Kg.

### 2.2 Humidity absorption and penetration test

The test carried out is based on the method described in the "Manual for Determining Physical Properties of Fertilizer", 2^{nd} Edition, 1993, by David, W. Ritland (ISBN 0-88090-101-2) in the section IFDC S-100 "Laboratory Absorption-Penetration test".

The following changes are made with respect to said method:

The climate conditions are: 20°C and between 75%-85% RH. A HERAEUS model HC 2057 climate chamber is used.

The cylindrical glass test tube has a diameter of 57mm and the height of fertilizer is between 37 and 48 mm, depending on the fertilizer grain size.

The weight of the granular fertilizer is 100g in each test tube, and controls are made, depending on each case, at 6, 24, 48 and 72 hours.

The results are expressed as mg/cm² of humidity absorption with respect to the top surface of the test tube, and as mm of penetration, and the visual appearance is described, including the formation of channels and the possible presence of water on the bottom.

### Example 3. Comparative tests (1)

A granular ammonium nitrate with 33.5% nitrogen, with a retained granule size of between 2.36 and 4.00 mm mesh size)" and a pH of 6.2 in water (4% by weight), was treated according to the "Manual for Determining Physical Properties of Fertilizer", 2^{nd} Edition, 1993, by David, W. Ritland (ISBN 0-88090-101-2) in the section IFDC S-107 "Size Analysis (Sieve Method, by spraying on the fertilizer the molten additives being tested in a rotary mixer, in a dose of 1200 ppm with respect to fertilizer weight.

The following additives were tested:
- SK FERT FWSAG, an anti-caking additive commercialised by Kao Corporation, S.A., which is a composition consisting of an oily base containing fatty amines and other fatty derivatives.
- LILAMIN AC-41, an anti-caking additive commercialised by AKZO-NOBEL, which is a composition consisting of an oily base containing fatty amines and other fatty derivatives.
- The composition A of Example 1.
- The composition B of Example 1.

Also tested is a blank, which is a sample of fertilizer without additives.

The tendency towards caking of each treated sample and the untreated fertilizer are assessed in the environmental conditions defined in point (b) of section 2.1 of Example 2, using 90 grams of fertilizer per test tube in a period of 6 days.

The results obtained are shown in table 2.

**Table 2.**

| Results of the comparative anti-caking tests (1) (40°C, 6 days, 1.26 Kg/cm²) | | |
|---|---|---|
| Additive | % caking before break-up | Resistance to break-up (Kg) |
| SK PERT FW5AG | 100.0 | 2.8 |
| LILAMIN AC-41 | 100.0 | 3.2 |
| Composition A, Ex. 1 | 0.0 | 0.0 |
| Composition B, Ex. 1 | 100.0 | 2.0 |
| Untreated blank | 100.0 | 33.5 |

From the results obtained it can be seen that compositions A and B of the invention provide good results as anti-caking agents, even somewhat better than the conventional anti-caking agents.

In addition, the absorption and penetration of humidity in the treated samples and the untreated fertilizer (blank) were tested according to the method described in section 2.2 of Example 2, using 100 g of ammonium nitrate per test tube at 82% RH. The results obtained are shown in table 3.

**Table 3.**

| Results of the humidity absorption and penetration tests (1) (20°C, 82% RH, fertilizer height 37mm) | | | |
|---|---|---|---|
| Additive | 6 hours | 24 hours | 48 hours |
| | absorption | absorption | absorption |
| | (mg/cm²) | (mg/cm²) | (mg/cm²) |
| | penetration | penetration | penetration |
| | (mm) | (mm) | (mm) |
| | visual | visual | visual |
| | appearance | appearance | appearance |
| SK PERT FW5AG | 25.3 | 104.7 | 174.8 |
| | 5 | 37 | 37 |
| | many channels | many channels | many channels |
| | reaching | reaching bottom | reaching bottom |
| | bottom | and water on the | and water on the |
| | | bottom | bottom |
| LILAMIN AC-41 | 33.2 | 132.6 | 200.5 |
| | 2 | 37 | 37 |
| | four channels | many channels | many channels |
| | reaching | reaching bottom | reaching bottom |
| | bottom | and water on the | and water on the |
| | | bottom | bottom |
| Composition A, Ex. 1 | 13.4 | 57.5 | 97.8 |
| | 5 | 18 | 33 |
| | no channels | no channels, no | no channels, no |
| | | water on bottom | water on bottom |
| Composition B, Ex. 1 | 12.4 | 51.7 | 92.2 |
| | 5 | 20 | 33 |
| | no channels | no channels, no | no channels, no |
| | | water on bottom | water on bottom |
| Untreated blank | 53.5 | 200.0 | 363.0 |
| | 22 | 37 | 37 |
| | no channels | no channels, but | no channels, but |
| | | water on bottom | water on bottom |

The untreated sample does not show the formation of channels since the water absorption is very high and uniform throughout the mass.

The results clearly show the high anti-humectation efficiency of the additives of the invention, and the inefficiency in this respect of the conventional anti-caking additives based on fatty amines.

### Example 4. Comparative tests (2)

With the same fertilizer used in Example 3 and in similar conditions, the water absorption of the following additives was tested:
- GALORYL ATH-626M, an anti-caking additive commercialised by C.F.P.I., which is a composition consisting of an oily base containing fatty amines and other fatty derivatives.
- The composition A of Example 1
- The composition B of Example 1

In addition a blank, which consisted of a sample of untreated fertilizer, was tested.

The results are shown in table 4.

**Table 4.**

| Results of the humidity absorption and penetration tests (2) (20°C, 80% RH, fertilizer height 40mm) | | | |
|---|---|---|---|
| Additive | 6 hours | 24 hours | 48 hours |
| | absorption | absorption | absorption |
| | (mg/cm²) | (mg/cm²) | (mg/cm²) |
| | penetration(mm) | penetration(mm) | penetration(mm) |
| | visual | visual | visual |
| | appearance | appearance | appearance |
| GALORYL ATH-626M | 18.3 | 79.3 | 159.5 |
| | 6 | 12 | 40 |
| | no channels | many channels | many channels |
| | | reaching bottom | reaching bottom |
| | | and water on the | and water on the |
| | | bottom | bottom |
| Composition A, Ex. 1 | 19.2 | 54.7 | 96.9 |
| | 3 | 15 | 40 |
| | no channels | no channels, no | no channels, no |
| | | water on bottom | water on bottom |
| Composition B, Ex. 1 | 15.3 | 48.1 | 87.5 |
| | 3 | 15 | 40 |
| | no channels | no channels, no | no channels, no |
| | | water on bottom | water on bottom |
| Untreate d blank | 38 | 132.3 | 247.3 |
| | 20 | 40 | 40 |
| | no channels | no channels, but | no channels, but |
| | | water on bottom | water on bottom |

The results obtained shown the superior efficiency of the additives of the invention compared to the anti-caking additive GALORYL ATH-626M, both regarding water absorption and formation of channels.

### Example 5. Comparative Tests (3)

A granular ammonium nitrate with 33.5% nitrogen, obtained from the factory in Rouen (France) of Grande Paroise S.A. company, was treated by spraying on the fertilizer the molten additives tested in a rotary mixer at a dose of 1200 ppm with respect to fertilizer weight.

The following additives were tested:
- SK FERT FW18M, an anti-caking additive commercialised by Kao Corporation, S.A., which is a composition consisting of an oily base containing fatty amines.
- SK FERT FW5AG, an anti-caking additive commercialised by Kao Corporation, S.A., which is a composition consisting of an oily base containing fatty amines and other fatty derivatives.
- SK FERT F85, an anti-caking additive commercialised by Kao Corporation, S.A., which is a composition consisting of mineral oil, fatty amine and phosphoric acid ester, as described in the patent application ES-A-2121694.
- The composition B of Example 1.

In addition a blank was tested, which consists of a sample of fertilizer without additives.

The tendency towards caking of the treated samples and the untreated fertilizer was tested in the environmental conditions defined in point (b) of section 2.1 of Example 2, using 80g of fertilizer per test tube for a period of 6 days.

The results obtained are shown in Table 5.

**Table 5.**

| Results of the comparative caking tests (3). (40°C, 6 days, 1.26 Kg/cm²) | | |
|---|---|---|
| Additive | % caking before break-up | Resistance to break-up (Kg.) |
| SK FERT FW18M | 60.1 | 0.0 |
| SK FERT FW5AG | 0.0 | 0.0 |
| SK FERT F85 | 0.0 | 0.0 |
| Composition B, Ex. 1 | 0.0 | 0.0 |
| Untreated blank | 100.0 | 12.9 |

The results obtained show that composition B of the invention gives good result as an anti-caking additive, on the same order as that obtained with conventional anti-caking additives.

In addition, the humidity absorption and penetration of the treated samples and the untreated fertilizer (blank) were tested following the method described in section 2.2 of Example 2, using 100 grams of ammonium nitrate per test tube at 80% RH. The results obtained are shown in Table 6.

**Table 6.**

| Results of the humidity absorption and penetration tests (2). (20°C, 80% RH, fertilizer height 48mm) | | | |
|---|---|---|---|
| Additive | 6 hours | 24 hours | 48 hours |
| | absorption | absorption | absorption |
| | (mg/cm²) | (mg/cm²) | (mg/cm²) |
| | penetration | penetration | penetration |
| | (mm) | (mm) | (mm) |
| | visual | visual | visual |
| | appearance | appearance | appearance |
| SK FERT FW18M | 25.2 | 71.8 | 135.3 |
| | 5 | 10 | 48 |
| | 4 channels | 6 channels | many channels |
| | reaching 25 mm | reaching bottom | reaching bottom |
| | | and water on the | and water on the |
| | | bottom | bottom |
| SK FERT FW5AG | 20.1 | 68.2 | 134.4 |
| | 5 | 10 | 48 |
| | 1 channel | 5 channels | many channels |
| | reaching | reaching bottom | reaching bottom |
| | bottom | and water on | and water on the |
| | | bottom | bottom |
| SK FERT F85 | 20.0 | 68.7 | 153.4 |
| | 5 | 8 | 12 |
| | 2 channels | 4 channels | many channels |
| | reaching 17mm | reaching bottom | reaching bottom |
| | | and water on | and water on the |
| | | bottom | bottom |
| Composition B, Ex. 1 | 14.6 | 51.6 | 113.3 |
| | 5 | 16 | 48 |
| | no channels | no channels, no | no channels, no |
| | | water on bottom | water on bottom |
| Untreated blank | 59.5 | 93.2 | 195.3 |
| | 10 | 35 | 48 |
| | no channels | no channels, but | no channels, but |
| | | water on bottom | water on bottom |

The results show the high anti-humectation efficiency of the additive of the invention and the inefficiency for this purpose of the conventional anti-caking additives based on fatty amines.

### Example 6. Comparative tests (4)

With the same fertilizer used in example 5, but in a dose of 1100 ppm, the aforementioned additives SK FERT FW18M, SK FERT FW5AG and SK FERT F85 and the compositions C and D of Example 1 were tested. In addition, a blank is tested which consists of a sample of fertilizer without additives.

The tendency towards caking of the treated samples and the untreated fertilizer was then tested in the two environmental conditions defined in section 2.1, (a) and (b) of Example 2. The results obtained are shown in Table 7.

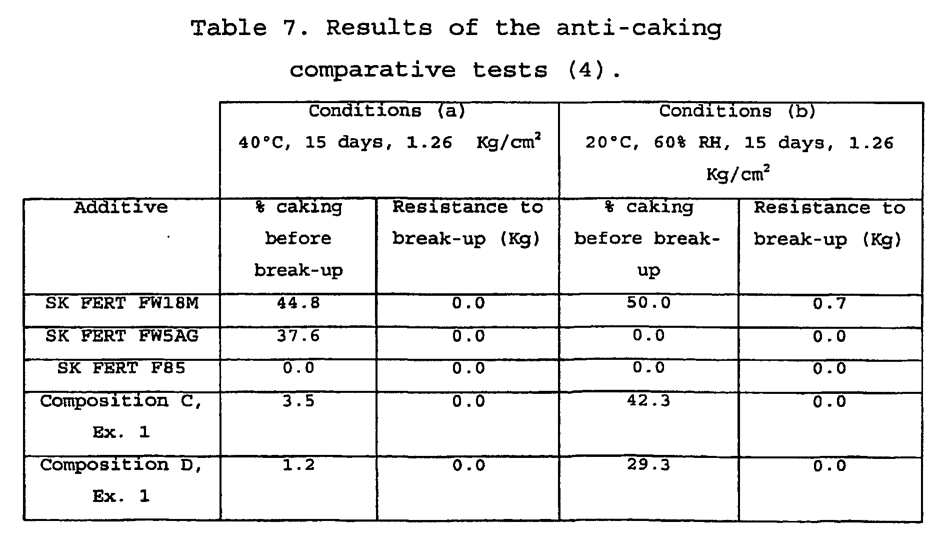

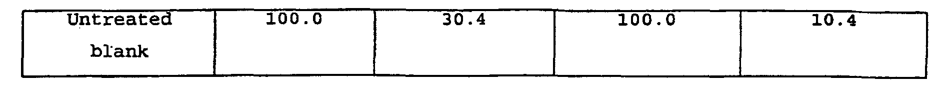

The results of Table 4 show that the additives of the invention show a considerable anti-caking efficiency, comparable to that of the conventional anti-caking additives tested.

In addition, the humidity absorption and penetration were assessed for the treated samples and the untreated fertilizer (blank), following the method described in section 2.2. of Example 2, using 100 grams of ammonium nitrate per test tube at 75% RH. The results obtained are shown in Table 8.

**Table 8.**

| Results of the humidity absorption and penetration tests (4) (20°C, 75% RH, fertilizer height 48mm) | | | |
|---|---|---|---|
| Additive | 6 hours | 24 hours | 48 hours |
| | absorption | absorption | absorption |
| | (mg/cm²) | (mg/cm²) | (mg/cm²) |
| | penetration | penetration | penetration |
| | (mm) | (mm) | (mm) |
| | visual | visual | visual |
| | appearance | appearance | appearance |
| SK PERT FW18M | 24.4 | 71.5 | 140.5 |
| | 3 | 15 | 48 |
| | 1 channel | 6 channels | many channels |
| | reaching 20 | reaching | reaching |
| | mm | bottom and | bottom |
| | | water on the | |
| | | bottom | |
| SK FERT FW5AG | 16.2 | 62.6 | 124.9 |
| | 4 | 8 | 48 |
| | 1 channel | 8 channels | many channels |
| | reaching | reaching | reaching |
| | 29mm | bottom | bottom |
| SK PERT F85 | 19.3 | 69.1 | 126.4 |
| | 5 | 7 | 48 |
| | 3 channels | 8 channels | many channels |
| | reaching | reaching | reaching |
| | 40mm | bottom | bottom and |
| | | | water on the |
| | | | bottom |
| Composition C, Ex. 1 | 18.1 | 58.0 | 105.0 |
| | 5 | 22 | 48 |
| | no channels | no channels, | no channels, |
| | | no water on | no water on |
| | | bottom | bottom |
| Composition D, Ex. 1 | 11.7 | 49.0 | 93.9 |
| | 0 | 17 | 48 |
| | no channels | no channels, | no channels, |
| | | no water on | no water on |
| | | bottom | bottom |
| Untreated blank | 22.6 | 90.6 | 169.48 |
| | 15 | 36 | 48 |
| | no channels | no channels, | no channels, |
| | | but water on | but water on |
| | | bottom | bottom |

The results show the high anti-humectation efficiency of the additives C and D of the invention compared to the low efficiency in this sense of the conventional anti-caking additives.

Although the present invention has been explained with reference to the described embodiments and the accompanying examples, those expert on the art may introduce multiple variations thereof, which will remain within the scope of the invention, which are solely limited by the appending claims.

Anything that does not alter, change or modify the essence of the described additives may be variable for the purposes of the present invention.

## Claims

1. An additive for preventing caking and humectation of nitrogenous fertilizers, having a material composition which is free of fatty amines or their salts, **characterized in that** it comprises:
(i) between 50 and 90 parts by weight of a macrocrystalline paraffin having a viscosity at 100°C between 2 and 5 cSt (ASTM D-455), with a paraffin oil content under 20% by weight (ASTM D-721);
(ii) between 0 and 20 parts by weight of a paraffinic oil having a viscosity at 100°C between 3 and 40 cSt (ASTM D-455) ;
(iii)between 0 and 10 parts by weight of a microcrystalline paraffin having a viscosity at 100°C between 10 and 25 cSt (ASTM D-455) with a paraffin oil content not greater than 15% by weight (ASTM D-721);
(iv) between 10 and 50 parts by weight of phosphoric acid monoesters and/or diesters of C₂-C₂₂ alkyl or C₂-C₁₂ arylalkyl, optionally alkoxylated;
so that the total paraffin oil content of the composition is greater than 1% by weight.

2. An additive according to claim 1, **characterized in that** the total paraffin oil content is between 5% and 25% by weight.

3. An additive according to claim 1 or claim 2, **characterized in that** it comprises:
(i) between 60 and 80 parts by weight of macrocrystalline paraffin;
(ii) between 2 and 12 parts by weight of paraffinic oil;
(iii)between 2 and 7 parts by weight of microcrystalline paraffin;
(iv) between 12 and 20 parts by weight of phosphoric acid monoesters and/or diesters;
so that the total paraffin oil content of the composition is between 7% and 20% by weight.

4. An additive according to any of claims 1 to 3, **characterized in that** the macrocrystalline paraffin is a Spindle-type paraffin, with a viscosity between 2 and 3 cSt at 100°C and an oil content not greater than 12% by weight.

5. An additive according to any of previous claims, **characterized in that** the molar ratio of monoester to diester in the phosphoric acid esters lies between 70:30 and 30:70.

6. An additive according to claim 5, **characterized in that** the molar ratio of monoester to diester in the phosphoric acid esters lies between 70:30 and 50:50.

7. An additive according to claim 6, **characterized in that** the molar ratio of monoester to diester in the phosphoric acid esters lies between 65:35 and 55:45.

8. An additive according to any of previous claims, **characterized in that** phosphoric acid esters are chosen from unalkoxylated phosphoric acid esters of C₂-C₂₂ alkyl.

9. An additive according to claim 8, **characterized in that** phosphoric acid esters are chosen from unalkoxylated phosphoric acid esters of C₁₆-C₁₈ alkyl, with a monoester to diester molar ratio of 60:40.

10. An additive according to any of previous claims, **characterized in that** the phosphoric acid esters have been partially or fully neutralized with a C₁-C₄ amine selected from monoalkylamine, dialkylamine, trialkylamine, monohydroxyalkylamine, dihydroxyalkylamine or trihydroxyalkylamine.

11. An additive according to claim 10, **characterized in that** the phosphoric acid esters are partially or fully neutralized with monoethanolamine.

12. The use of the additive according to claims 1 to 11 to prevent caking and humectation of nitrogenous fertilizers.

13. A method for obtaining nitrogenous fertilizers that are resistant to caking and humectation, **characterised in that** a coating of the additive of claims 1 to 11 is applied on the surface of the fertilizer granules.

14. A method according to claim 13, **characterized in that** the additive is applied on the fertilizer in a proportion between 500 and 2000 ppm with respect to the fertilizer weight.

## Patentansprüche

1. Ein Zusatzstoff zum Verhindern des Anbackens und des Feuchtwerdens von Stickstoffdüngern mit einer Materialzusammensetzung, die keine fetthaltigen Amine oder deren Salze enthält, **dadurch gekennzeichnet, dass** er Folgendes umfasst:
(i) Zwischen 50 und 90 Gewichtsanteile eines makrokristallinen Paraffins, dessen Viskosität bei 100°C zwischen 2 und 5 cSt (ASTM D-455) liegt und mit einem Paraffinölgehalt unter 20% Massenanteil (ASTM D-721);
(ii) Zwischen 0 und 20 Gewichtsanteile eines Paraffinöls, dessen Viskosität bei 100°C zwischen 3 und 40 cSt (ASTM-D455) liegt;
(ii) Zwischen 0 und 10 Gewichtsanteile eines mikrokristallinen Paraffinöls, dessen Viskosität bei 100° zwischen 10 und 25 cSt (ASTM-D455) liegt mit einem Paraffinölgehalt, der 15% Massenanteil nicht überschreitet (ASTM D-721);
(iv)Zwischen 10 und 50 Massenanteilen Phosphorsäuremonoester und/oder Diester von C₂-C₂₂ alkyl oder C₂-C₁₂-arylalkyl, wahlweise mit Alkoxy angereichtert;
so dass der gesamte Paraffinölgehalt über 1% Massenanteil liegt.

2. Ein Zusatzstoff gemäss Anspruch 1, **dadurch gekennzeichnet, dass** der gesamte Paraffinölgehalt zwischen 5% und 25% Massenanteil liegt.

3. Ein Zusatzstoff gemäss Anspruch 1 oder 2, **dadurch gekennzeichnet, dass** er Folgendes umfasst:
(i) Zwischen 60 und 80 Gewichtsanteilen makrokristallines Paraffin;
(ii) Zwischen 2 und 12 Gewichtsanteilen Paraffinöl;
(iii) Zwischen 2 und 7 Gewichtsanteilen mikrokristallines Paraffin;
(iv) Zwischen 12 und 20 Gewichtsanteile Phosphorsäuremonoester und/oder-diester;
so dass der Gesamtgehalt an Paraffinöl der Zusammensetzung zwischen 7% und 20% Massenanteil beträgt.

4. Ein Zusatzstoff gemäss Anspruch 1 bis 3, **dadurch gekennzeichnet, dass** das makrokristalline Paraffin ein spindelartiges Paraffin ist, dessen Viskosität zwischen 2 und 3 cSt bei 100°C liegt und einen Ölgehalt aufweist, der 12% Massenanteil nicht überschreitet.

5. Ein Zusatzstoff gemäss einem der vorangegangenen Ansprüche, **dadurch gekennzeichnet, dass** das Molverhältnis des Monoesters zum Diester in den Phosphorsäureestern zwischen 70:30 und 30:70 liegt.

6. Ein Zusatzstoff gemäss Anspruch 5, **dadurch gekennzeichnet, dass** das Molverhältnis des Monoesters zum Diester in den Phosphorsäureestern zwischen 70:30 und 50:50 liegt liegt.

7. Ein Zusatzstoff gemäss Anspruch 6, **dadurch gekennzeichnet, dass** das Molverhältnis des Monoesters zum Diester in den Phosphorsäureestern zwischen 65:35 und 55:45 liegt.

8. Ein Zusatzstoff gemäss einem der vorangegangenen Ansprüche, **dadurch gekennzeichnet, dass** die Phosphorsäureester zwischen nicht alkoxyangereicherten Phosphorsäureester mit C₂-C₂₂-alkyl gewählt werden.

9. Ein Zusatzstoff gemäss Anspruch 8, **dadurch gekennzeichnet, dass** die Phosphorsäureester zwischen nicht alkoxyangereicherten Phosphorsäureester mit C₁₆-C₁₈-alkyl gewählt werden mit einem Monoester-Diesterverhältnis von 60:40.

10. Ein Zusatzstoff gemäss einem der vorangegangenen Ansprüche, **dadurch gekennzeichnet, dass** die Phosphorsäureester teilweise oder vollständig mit einem C₁-C₄amin neutralisiert worden sind, das zwischen Monoalkylamin, Dialkylamin, Trialkylamin, Monohydroxyalkylamin, Dihydroxyalkylamin oder Trihydroxyalkylamin gewählt worden ist.

11. Ein Zusatzstoff gemäss Anspruch 10, **dadurch gekennzeichnet, dass** die Phosphorsäureester teilweise oder vollständig mit Monoethanolamin neutralisiert worden sind.

12. Die Anwendung des Zusatzstoffes gemäss Anspruch 1 bis 11 zum Verhindern des Anbackens und Feuchtwerdens von Stickstoffdüngern.

13. Eine Methode zur Herstellung von Stickstoffdüngern, die widerstandsfähig gegen Anbacken und Feuchtwerden sind, **dadurch gekennzeichnet, dass** eine Beschichtung des Zusatzstoffes der Ansprüche 1 bis 11 auf die Oberfläche von Düngerkörnem aufgetragen wird.

14. Eine Methode gemäss Anspruch 13, **dadurch gekennzeichnet, dass** der Zusatzstoff auf den Dünger in einem Verhältnis zwischen 500 und 2000 ppm hinsichtlich des Düngergewichts aufgetragen wird.

## Revendications

1. Un additif pour prévenir la concrétion et l'humectation des fertilisants azotés, qui ont composition de matières libre d'amines grasses ou de leurs sels, **caractérisés en ce qu'**il comprend:
(i) entre 50 et 90 parts en poids d'une paraffine macrocristalline ayant une viscosité à 100°C entre 2 et 5 cSt (ASTM D-455) et avec un contenu d'huile de paraffine inférieur à 20% en poids (ASTM D-721);
(ii) entre 0 et 20 parts en poids d'une huile paraffinique ayant une viscosité à 100°C entre 3 et 40 cSt (ASTM D-455);
(iii) entre 0 et 10 parts en poids d'une paraffine microcristalline ayant une viscosité à 100°C entre 10 et 25 cSt (ASTM D-455) avec un contenu d'huile de paraffine non supérieur à 15% en poids (ASTM D-721);
(iv) entre 10 et 50 parts en poids de monoesters et/ou diesters d'acide phosphorique d'alkyle C₂-C₂₂ ou arylalkyle C₂-C₁₂, optionnellement alcoxylé;
de manière que le contenu total d'huile de paraffine soit supérieur à 1% en poids.

2. Un additif selon la revendication 1, **caractérisé en ce que** le contenu total d'huile de paraffine est entre 5% et 25% en poids.

3. Un additif selon la revendication 1 ou 2, **caractérisé en ce qu'**il comprend:
(i) entre 60 et 80 parts en poids de paraffine macrocristalline;
(ii) entre 2 et 12 parts en poids d'huile paraffinique;
(iii) entre 2 et 7 parts en poids de paraffine microcristalline;
(iv) entre 12 et 20 parts en poids de mono esters et/ou diesters d'acide phosphorique;
de manière que le contenu total d'huile de paraffine de la composition soit entre 7% et 20% en poids.

4. Un additif selon l'une quelconque des revendications 1 à 3, **caractérisé en ce que** la paraffine macrocristalline est une paraffine de type fuseau, avec une viscosité entre 2 et 3 cSt à 100°C et un contenu d'huile non supérieur à 12% en poids.

5. Un additif selon l'une quelconque des revendications antérieures, **caractérisé en ce que** le rapport molaire de monoester : diester dans les esters d'acide phosphorique est entre 70:30 et 30:70.

6. Un additif selon la revendication 5, **caractérisé en ce que** le rapport molaire de monoester : diester dans les esters d'acide phosphorique est entre 70:30 et 50:50.

7. Un additif selon la revendication 6, **caractérisé en ce que** le rapport molaire de monoester : diester dans les esters d'acide phosphorique est entre 65:35 et 55:45.

8. Un additif selon l'une quelconque des revendications antérieures, **caractérisé en ce que** les esters d'acide phosphorique esters sont choisis parmi les esters d'acide phosphorique non alcoxylés d'alkyle C₂-C₂₂.

9. Un additif selon la revendication 8, **caractérisé en ce que** les esters d'acide phosphorique sont choisis parmi les esters d'acide phosphorique non alcoxilés d'alkyle C₁₆-C₁₈, avec un rapport molaire de monoester : diester de 60:40.

10. Un additif selon l'une quelconque des revendications antérieures, **caractérisé en ce que** les esters d'acide phosphorique esters ont été partiellement ou complètement neutralisées avec une amine C₁-C₄ sélectionnée parmi la monoalkylamine, dialkylamine, trialkylamine, monohydroxyalkylamine, dihydroxyalkylamine ou trihydroxyalkylamine.

11. Un additif selon la revendication 10, **caractérisé en ce que** les esters d'acide phosphorique sont partiellement ou complètement neutralisés avec une monoéthanolamine.

12. L'utilisation de l'additif selon les revendications 1 à 11 pour prévenir la concrétion et l'humectation des fertilisants azotés.

13. Une méthode pour obtenir des fertilisants azotés qui sont résistants à la concrétion et à l'humectation, **caractérisée en ce que** l'on applique un revêtement de l'additif des revendications 1 à 11 sur la surface des granules de fertilisant.

14. Une méthode selon la revendication 13, **caractérisé en ce que** l'on applique l'aditif sur le fertilisant dans une proportion entre 500 et 2000 ppm par rapport au poids de fertilisant.
